# FASCICULE DE BREVET EUROPEEN

(11) **EP 1 953 276 B1**
(45) Date de publication et mention de la délivrance du brevet: **20.01.2010**
(21) Numéro de dépôt: 08356016.9
(22) Date de dépôt: 30.01.2008
(51) Int. Cl.: D03C 5/00, D03C 13/00, H02K 7/10

(54) **Dispositif de formation de la foule incorporant des blocs moteurs électriques et métier à tisser équipé d'un tel dispositif**
Vorrichtung zur Fachbildung die elektrische Motorblöcke enthält, und Webmaschine mit solch einer Vorrichtung
Shed forming device including electric motor blocks and loom equipped with such a device

(30) Priorité: 31.01.2007 FR 0700670
(43) Date de publication de la demande: 06.08.2008
(73) Titulaire: STAUBLI FAVERGES, 74210 Faverges (FR)
(72) Inventeur: Communal, Sébastien, 74410 Duingt (FR); Puget, Sylvain, 74210 Seythenex (FR)
(74) Mandataire: Myon, Gérard Jean-Pierre

(56) Documents cités:
- EP-A- 1 096 647
- EP-A- 1 489 208
- EP-A- 1 741 816
- DE-A1- 19 532 976
- US-A- 5 491 370
- US-A1- 2005 183 788
- US-B1- 6 909 210

## Description

La présente invention concerne un dispositif de formation de la foule pour métier à tisser incorporant au moins un actionneur électrique. L'invention concerne également un métier à tisser comprenant un tel dispositif.

Sur un métier à tisser, il est connu d'employer un ensemble de cadres de lisses pour former la foule. Ces cadres de lisses sont mus par un système de tirage qui peut être lui-même manoeuvré par une ratière ou, alternativement, au moyen d'actionneurs électriques. FR-A-2 856 412 décrit ainsi un dispositif de formation de la foule dont le système de tirage est connecté, pour chaque cadre de lisse, à un actionneur électrique à mouvement rotatif oscillant.

L'actionneur électrique comprend en l'occurrence un ensemble autonome incorporant un moteur électrique entouré de son carter. Pour recevoir la puissance électrique, d'une part, et échanger des signaux électriques avec des moyens de contrôle/commande, d'autre part, l'actionneur électrique est pourvu de deux connecteurs destinés à être reliés respectivement à une ligne d'alimentation en courant électrique et à une ligne de transmission de signaux vers des moyens de contrôle/commande par l'intermédiaire d'une platine. Ainsi, les moyens de contrôle/commande qui transmettent la puissance électrique au moteur et échangent des signaux se trouvent à distance du moteur, par exemple au sein d'une armoire de commande commune à plusieurs actionneurs.

Un dispositif de formation de la foule comporte plusieurs lames ou cadres de lisse, généralement une vingtaine, qu'il faut manoeuvrer individuellement. Pour cela, le système de tirage du dispositif doit se connecter, pour chaque lame ou cadre de lisse à un actionneur associé à des moyens de contrôle/commande distants transmettant la puissance et gérant les signaux de contrôle/commande par des circuits électriques qui doivent être indépendants les uns des autres. Ceci implique l'installation, entre l'armoire de commande et les actionneurs, d'autant de lignes électriques de puissance et de signaux pour le contrôle/commande qu'il y a d'actionneurs. Cela rend les opérations de connexion longues donc coûteuses. De plus, cela nécessite la mise en oeuvre de mesures particulières pour éviter les perturbations électromagnétiques sur les signaux de contrôle/commande par les courants circulant dans les nombreuses lignes électriques voisines.

En outre, la distance séparant un actionneur de ses moyens de contrôle/commande implique la mise en oeuvre de deux systèmes de refroidissement pour protéger les moyens de contrôle/commande, d'une part, et le moteur, d'autre part, des effets d'un échauffement excessif. Or, l'implantation de deux circuits de refroidissement pour l'écoulement de fluides caloporteurs obère également le prix de revient de l'installation.

US-B1-6909210 décrit un actionneur électrique qui est dédié à un véhicule automobile et qui comprend un bloc moteur électrique logé dans un carter entre deux flasques. Le flasque arrière comporte en outre un circuit électrique et présente un circuit de refroidissement. Chacun des flasques loge un roulement formant palier pour l'arbre moteur. Le flasque arrière est donc lié étroitement et directement au bloc moteur par l'intermédiaire d'un roulement. Ce flasque arrière subit donc des vibrations et un échauffement générés ou transmis par le roulement en service. A terme, cela risque de dégrader la tenue du flasque sur le bloc moteur et donc l'étanchéité du circuit de refroidissement. Un tel actionneur ne peut donc pas équiper un dispositif de formation de la foule, car les vibrations y sont de fréquence et d'intensité particulièrement élevées. En outre, comme les flasques sont étroitement liés au bloc moteur, l'assemblage et le désassemblage de l'actionneur au montage ou en maintenance sont relativement coûteux.

La présente invention vise notamment à remédier à ces inconvénients en proposant un dispositif de formation de la foule dans lequel chaque actionneur électrique ne nécessite pas la mise en oeuvre de deux systèmes de refroidissement ni de lignes électriques spécifiques, tout en limitant les perturbations électromagnétiques, donc les risques de défaillance.

A cet effet, l'invention concerne un dispositif de formation de la foule pour métier à tisser équipé de plusieurs cadres de lisse et comprenant un système de tirage connecté, pour chaque cadre de lisse, à un ensemble autonome destiné à manoeuvrer le système de tirage et comprenant au moins un bloc moteur électrique logé dans un carter et au moins un circuit électrique destiné à transmettre notamment la puissance électrique au bloc moteur électrique. L'ensemble autonome comprend également un support agencé à proximité du bloc moteur électrique, le circuit électrique étant monté sur le support, alors que le support présente au moins un conduit de refroidissement pour l'écoulement d'un fluide caloporteur. De plus, l'ensemble autonome comprend des éléments amortisseurs agencés de manière à réaliser une liaison souple entre le support et le bloc moteur électrique.

En d'autres termes, le dispositif de formation de la foule présente un circuit électrique rapporté sur le moteur électrique associé, par l'intermédiaire de son support, lequel permet en outre le passage d'un fluide caloporteur pour le refroidissement de l'ensemble autonome.

Selon des caractéristiques avantageuses de l'invention :
- le support est fixé sur une extrémité axiale du carter ;
- le support présente deux conduits de refroidissement et le bloc moteur électrique est équipé d'un circuit de refroidissement raccordé aux conduits de refroidissement ;
- le circuit de refroidissement comprend un canal hélicoïdal ménagé entre le carter et une chemise entourant le bloc moteur électrique ;
- les éléments amortisseurs comprennent des plots amortisseurs s'étendant chacun entre une surface radiale interne du carter et une surface solidaire du support ;
- les éléments amortisseurs comprennent un joint réalisé en matériau élastique et disposé entre le support et une surface axiale du carter ;
- le circuit de refroidissement est raccordé aux conduits par l'intermédiaire de tuyaux souples ;
- le support est constitué d'un tronçon de profilé dont la partie centrale définit deux orifices traversant s'étendant parallèlement à l'axe longitudinal du profilé et formant chacun un conduit de refroidissement ;
- le support présente deux ailes latérales s'étendant transversalement à l'axe longitudinal du profilé et en ce que le support est en outre équipé de deux plaques et d'un couvercle aptes à recouvrir les sections libres du profilé, de façon à former un boîtier pour englober le circuit électrique ;
- le support présente, en projection dans un plan perpendiculaire à l'axe de rotation du bloc moteur, un encombrement inférieur à l'encombrement de la face du bloc moteur qui porte l'arbre de sortie ;
- l'ensemble autonome comprend deux blocs moteurs montés côte-à-côte avec leurs axes de rotation sensiblement parallèles entre eux, le support et le circuit électrique étant communs aux blocs moteurs ;
- le bloc électrique comprend un moteur de type synchrone et sans balai, le circuit électrique étant apte à commander la commutation des courants électriques destinés à actionner le moteur.

Par ailleurs, l'invention concerne un métier à tisser comprenant au moins un dispositif de formation de la foule tel que précédemment exposé et comprenant plusieurs ensembles autonomes.

Selon une caractéristique avantageuse, les ensembles autonomes sont reliés en série, d'une part, à une seule ligne d'alimentation en puissance électrique et, d'autre part, à un seul câble de communication commun.

L'invention sera mieux comprise et d'autres avantages de celle-ci apparaîtront également à la lumière de la description qui va suivre d'un dispositif de formation de la foule conforme à l'invention, donnée uniquement à titre d'exemple et faite en référence aux dessins annexés dans lesquels :
- la figure 1 est une vue en perspective d'un dispositif de formation de la foule conforme à un premier mode de réalisation de l'invention, dans lequel un ensemble autonome du dispositif incorpore deux moteurs électriques ;
- la figure 2 est une vue en coupe partielle selon le plan P_{A} de l'ensemble autonome du dispositif représenté à la figure 1 ;
- la figure 3 est une vue en perspective d'une partie de l'ensemble autonome du dispositif de la figure 1 ;
- la figure 4 est une vue en coupe partielle selon le plan P_{C} à la figure 1 montrant un détail du dispositif de la figure 1 ;
- la figure 5 est une vue en coupe partielle selon le plan P_{B} à la figure 1 montrant un détail du dispositif de la figure 1 ;
- la figure 6 est une vue en perspective d'un ensemble autonome d'un dispositif de formation de la foule conforme à un deuxième mode de réalisation de l'invention.

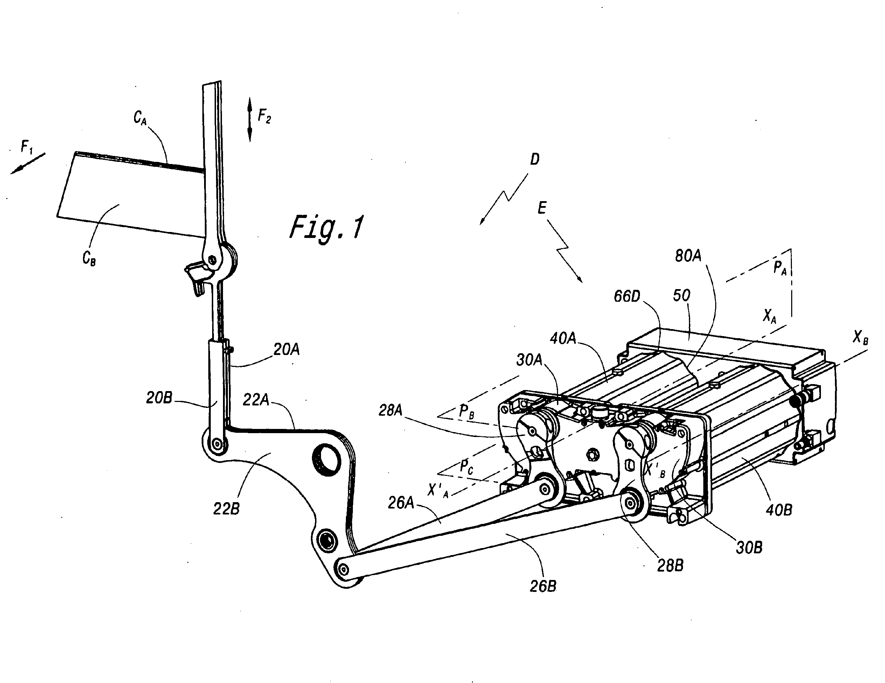

Le dispositif de formation de la foule représenté à la figure 1 comprend plusieurs cadres de lisse, dont deux sont représentés sur cette figure avec les références C_{A} et C_{B}. De manière connue en soi, les cadres C_{A} et C_{B} sont équipés de lisses non représentées dont les oeillets respectifs sont traversés par des fils de chaîne symbolisés par la flèche F₁ indiquant leur sens de déplacement selon une direction perpendiculaire au plan des cadres.

Chaque cadre C_{A} ou C_{B} est animé d'un mouvement d'oscillations verticales dans le sens de la double flèche F₂. Ce mouvement est commandé notamment par des bielles distales 20A et 20B qui sont attelées respectivement en partie basse des cadres C_{A} et C_{B} ainsi que sur deux leviers oscillants 22A et 22B. Les leviers 22A et 22B sont reliés, respectivement par des bielles proximales 26A et 26B, à des manetons 28A et 28B, lesquels sont montés respectivement sur des mécanismes d'entraînement rotatif 30A et 30B constituant les organes de sortie respectifs de deux moteurs électriques logés chacun dans un bloc moteur 40A ou 40B.

Dans le mode de réalisation illustré par la figure 1, les deux blocs moteurs 40A et 40B sont incorporés côte-à-côte dans un ensemble autonome E, lequel comprend en outre un boîtier 50 commun aux blocs moteurs 40A et 40B. Le bloc moteur 40B est ici identique au bloc moteur 40A, si bien que la description suivante de ce dernier peut lui être directement transposée.

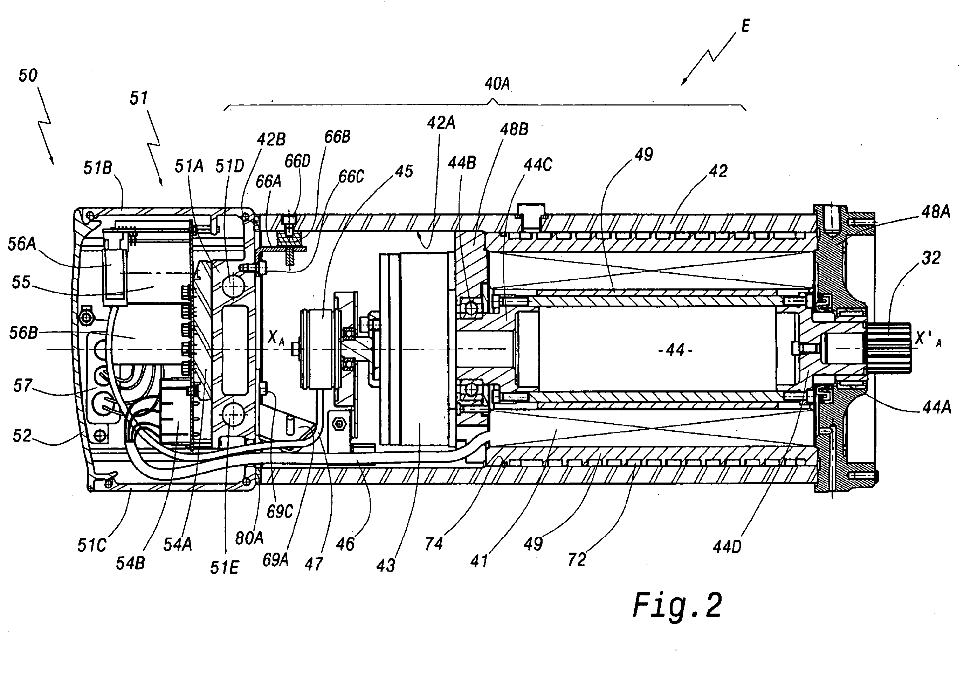

Comme le montre la figure 2, le bloc moteur 40A est logé dans un carter 42 en forme de cylindre allongé d'axe X_{A}-X'_{A} confondu avec l'axe de rotation d'un rotor 44 appartenant au bloc moteur 40A. Il s'agit ici d'un moteur synchrone sans balai. Un flasque externe 48A est solidarisé au carter 42 de façon à en obturer une première ouverture axiale. Un flasque interne 48B globalement annulaire est monté fixe au sein du carter 42 et coaxialement à celui-ci. Le rotor 44, pourvu d'aimants 49 est supporté en rotation autour de son axe X_{A}-X'_{A} par rapport aux flasques externe 48A et interne 48B respectivement au moyen de paliers 44A et 44B. Il est entouré par un ensemble de tôles et de bobinages constituant un stator 41, en forme de cylindre creux et coaxial à l'axe X_{A}-X'_{A}. Les flasques externe 48A et interne 48B sont montés fixes par rapport au carter 42.

Au-delà de sa partie médiane située entre les paliers 44A et 44B, le rotor 44 se prolonge par un chapeau 44C de façon à coopérer avec un système de freinage 43 commandé électriquement et connu en soi. Le chapeau 44C se termine par un arbre coopérant avec un capteur 45 apte à émettre des signaux électriques représentatifs de la position des organes mobiles du moteur. Le capteur 45 est ici constitué d'un résolveur destiné à mesurer l'angle de rotation du rotor 44. Au niveau de son extrémité 44D opposée au chapeau 44C, le rotor 44 est solidarisé avec un pignon 32 qui constitue l'arbre de sortie transmettant un mouvement rotatif au mécanisme d'entraînement 30A.

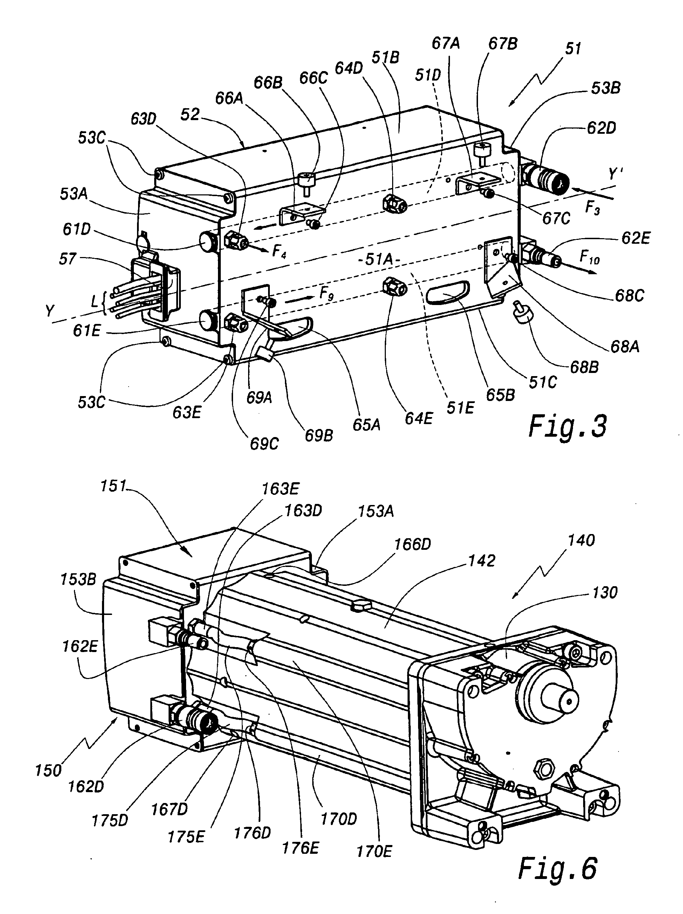

L'extrémité axiale du carter 42 opposée à l'ouverture obturée par le flasque externe 48A est recouverte par le boîtier 50 commun aux blocs moteurs 40A et 40B. Le boîtier 50 comprend un support 51 à section globalement en U dont les extrémités libres des branches sont réunies par un couvercle 52 et dont les faces latérales sont recouvertes par des plaques 53A et 53B visibles sur la figure 3. Les plaques 53A et 53B sont assemblées de manière amovible au support 51 par exemple au moyen de vis 53C. Le boîtier 50 délimite ainsi un volume creux et fermé dans lequel peuvent être logés les composants électriques nécessaires au fonctionnement du moteur. Le support 51 est donc indépendant des blocs moteurs 40A et 40B, si bien qu'ils peuvent être assemblés ou désassemblés séparément, ce qui facilite le montage et la maintenance.

Plus précisément, le support 51 est composé d'un tronçon de profilé présentant une partie centrale 51A à partir de laquelle s'étendent transversalement deux ailes latérales 51 B et 51C. En l'occurrence, le profilé formant le support 51 est réalisé en aluminium. La face externe de la partie centrale 51A est disposée en bout des carters 42 des blocs moteurs 40A et 40B en regard de l'ouverture axiale située du côté du chapeau 44C. Le support 51 s'étend selon une direction Y-Y' orthogonale aux axes de rotation X_{A}-X'_{A} et X_{B}-X'_{B} respectifs des blocs moteurs 40A et 40B.

Le boîtier 50 loge une unité de contrôle/commande 55 destinée à déterminer et à fournir l'alimentation électrique des différents bobinages des stators des blocs moteurs 40A et 40B, en fonction de la position de chaque rotor 44 à partir des signaux provenant de chaque capteur 45 et d'informations extérieures à l'ensemble autonome E. Cette unité de contrôle/commande 55 est une carte électronique qui comprend un circuit électrique 54A monté sur la face interne de la partie centrale 51A.

Le circuit électrique 54A est électriquement relié à un câble de puissance 46 par l'intermédiaire d'un connecteur 54B. Le circuit 54A peut ainsi alimenter les bobinages des stators 41 en courant électrique. Compte tenu de l'assemblage du boîtier 50 sur le carter 42, le support 51, muni du circuit 54A, est agencé à proximité du bloc moteur 40A.

Par ailleurs, l'unité de contrôle/commande 55 est électriquement reliée au capteur 45 par l'intermédiaire d'un câble 47 et d'un connecteur interne 56A. De plus, elle peut être électriquement reliée à un système de contrôle/commande externe non représenté par l'intermédiaire d'un connecteur externe 56B. Ce connecteur externe 56B reçoit un faisceau de lignes électriques L traversant la plaque latérale 53A par l'intermédiaire d'un presse étoupe 57. La ligne électrique L possède également un câble de puissance électrique raccordé au connecteur externe 56B.

Ainsi, l'unité de contrôle/commande 55 est capable de générer l'alimentation électrique des bobinages des stators à partir d'une alimentation extérieure qui peut être commune à plusieurs unités de contrôle/commande. Elle tient compte de la position des rotors qu'elle contrôle et d'informations extérieures telle que l'amplitude prévue du mouvement des cadres ou la position du métier dans son cycle.

S'agissant d'un moteur synchrone sans balai, l'unité de contrôle/commande 55 inclut un circuit électronique apte à commander la commutation des courants électriques destinés à actionner le moteur. Ce circuit constitue le variateur du moteur. D'autres types de moteurs électriques permettent également de réaliser l'invention.

L'unité de contrôle/commande 55 commande également le système de freinage 43 par l'intermédiaire du câble 47 et du connecteur interne 56A.

La partie centrale 51A est percée de deux ouvertures 65A et 65B à travers lesquelles sont passés les câbles de puissance 46 et de communication 47 reliant les blocs moteurs 40A et 40B au circuit électrique logé dans le boîtier 50. Le circuit électrique, comprenant le circuit 54A et l'unité 55 et logé dans le boîtier 50, peut ainsi piloter le fonctionnement du bloc moteur 40A, ainsi que celui du bloc moteur 40B, dans la mesure où ce dernier est équipé de composants et de câbles électriques semblables à ceux précédemment décrits.

Lorsqu'ils alimentent les blocs moteurs 40A et 40B en courant électrique, les composants de puissance du circuit 54A peuvent présenter un échauffement important, qu'il est souhaitable de tempérer pour les ménager. Dans ce but, le support 51 est traversé de part en part par deux orifices formant des conduits 51 D et 51 E de refroidissement permettant l'écoulement d'un fluide caloporteur tel que de l'eau. Les conduits 51 D et 51 E s'étendent dans le sens de production du profilé, c'est-à-dire selon son axe longitudinal Y-Y'. Ils sont ici circulaires et de diamètre constant. Les conduits 51 D et 51 E sont ménagés dans l'épaisseur de la partie centrale 51A, de façon à se trouver près du circuit 54A dont les composants doivent être refroidis.

Les plaques 53A et 53B présentent respectivement deux encoches positionnées au niveau des conduits 51 D et 51 E de façon à en dégager les extrémités. Les extrémités des conduits 51 D et 51 E situées du côté de la plaque 53A sont respectivement obturées par des bouchons 61 D et 61 E. Les extrémités opposées, situées du côté de la plaque 53B, sont équipées respectivement d'un premier élément de raccord d'entrée 62D et d'un premier élément raccord de sortie 62E. Les premiers éléments de raccords 62D et 62E sont destinés à recevoir chacun un tuyau non représenté respectivement pour amener et évacuer le fluide caloporteur mis en mouvement par une pompe non représentée.

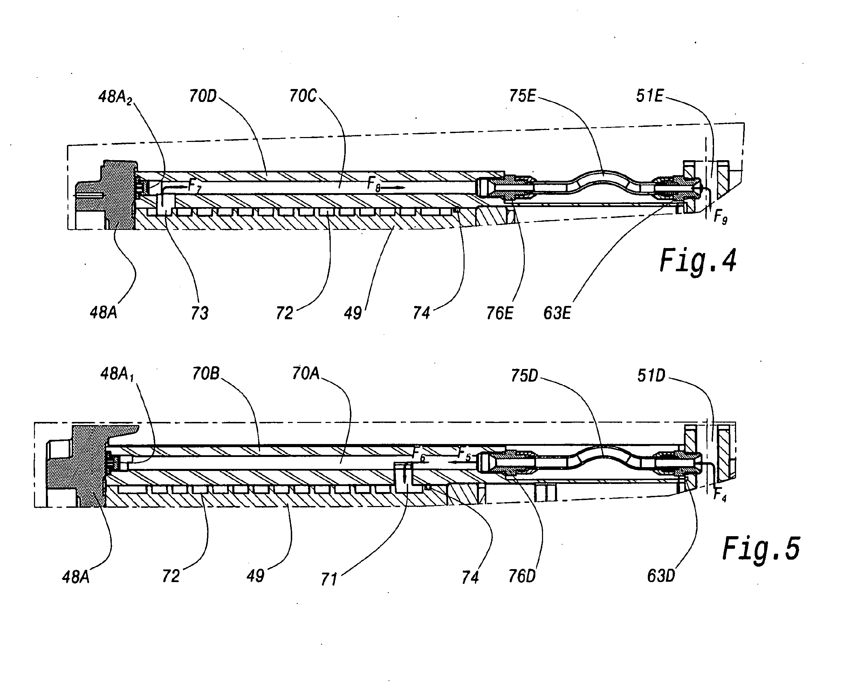

Les blocs moteurs 40A et 40B présentent également des éléments qui s'échauffent en fonctionnement et qu'il convient de refroidir, tel que les bobinages du stator 41. Pour cela, les blocs moteurs sont équipés chacun d'un circuit de refroidissement détaillé sur les figures 4 et 5 et qui est raccordé aux conduits 51 D et 51 E. Le circuit de refroidissement du bloc moteur 40A comprend un canal 72 hélicoïdal ménagé entre le carter 42 et une chemise 49 qui entoure le stator 41. Pour délimiter le canal 72, la surface externe de la chemise 49 présente un filetage à pas carré.

L'amenée du fluide caloporteur dans le canal 72 est réalisée par un conduit rectiligne 70A, parallèle à l'axe X_{A}-X'_{A} et percé dans une excroissance radiale 70B du carter 42. Un trou d'entrée 71 réalisé dans l'excroissance 70B permet au fluide caloporteur de pénétrer dans la partie supérieure du canal hélicoïdal 72. Un conduit rectiligne 70C, parallèle à l'axe X_{A}-X'_{A}, percé dans une excroissance radiale 70D du carter 42, permet d'évacuer le fluide caloporteur hors du canal 72 par l'intermédiaire d'un trou de sortie 73 ménagé dans la partie inférieure de l'excroissance radiale 70D. L'excroissance radiale 70D s'étend le long du carter 42 sur une partie longitudinale située en regard du stator 41.

Deux bouchons 48A₁ et 48A₂ sont vissés aux extrémités des canaux 70A et 70C, de façon à en réaliser l'étanchéité. D'autres éléments d'étanchéité peuvent équiper le circuit de refroidissement, tel qu'un joint torique 74 logé dans une gorge usinée sur la surface radiale externe de la chemise 49.

Les extrémités des conduits rectilignes 70A et 70C opposées au flasque externe 48A sont équipées respectivement d'un embout d'entrée 76D et d'un embout de sortie 76E sur lesquels sont respectivement raccordés un tuyau d'entrée 75D et un tuyau de sortie 75E. Par leur autre extrémité, les tuyaux 75D et 75E sont reliés aux conduits 51 D et 51 E du support 51 respectivement par l'intermédiaire de deux deuxièmes éléments de raccord 63D et 63E. Le raccordement des tuyaux 75D et 75E sur chacun des embouts 76D et 76E et sur chacun des deuxièmes éléments de raccord 63D et 63E est réalisé de manière connue par le pincement des parois des tuyaux entre une pièce mobile et une pièce fixe.

Comme le montre la figure 3, les deuxièmes éléments de raccord 63D et 63E réalisent des piquages respectivement près des extrémités des conduits 51 D et 51 E opposées aux premiers éléments de raccords 62D et 62E. De manière analogue, le bloc moteur 40B peut être alimenté par des deuxièmes éléments de raccords 64D et 64E réalisant des piquages respectivement dans les parties médianes des conduits 51 D et 51 E.

Ainsi, comme le montrent les flèches F₃ à F₁₀ aux figures 3 à 5, le fluide caloporteur entre par le premier élément de raccord d'entrée 62D et s'écoule dans le conduit 51 D où il contribue à refroidir le circuit électrique 54A. Puis, le fluide caloporteur s'écoule par les piquages 63D et 64D vers les circuits de refroidissement respectifs des blocs moteurs 40A et 40B. Depuis le piquage 63D, le fluide passe alors dans le tuyau d'entrée 75D, dans le conduit rectiligne 70A, dans le trou d'entrée 71 et à travers le canal hélicoïdal 72 où il contribue à refroidir les parties chaudes du bloc moteur 40A.

Le fluide caloporteur est ensuite évacué par le trou de sortie 73, le long du conduit rectiligne 70C et du tuyau 75E avant de déboucher dans le conduit 51 E par l'intermédiaire du piquage réalisé par le deuxième élément de raccord 63E. Puis, le fluide caloporteur s'écoule dans le conduit 51 E où il contribue encore à refroidir le circuit 54A, avant d'être évacué par le premier élément de raccord de sortie 62E.

Les caractéristiques du fluide caloporteur, en particulier son débit, sont déterminées notamment en fonction de la quantité de chaleur qu'il est destiné à évacuer.

L'invention permet donc d'accoler le bloc moteur du dispositif D de formation de la foule à l'unité de contrôle/commande réalisant l'alimentation en puissance, le traitement et la transmission des signaux nécessaires à son fonctionnement, tout en assurant le refroidissement des parties qui s'échauffent.

Les câbles électriques 46 et 47 reliant le circuit électrique 54A et l'unité 55 au bloc moteur 40A sont relativement courts, en particulier plus courts que les câbles ayant les mêmes fonctions dans les matériels connus, si bien qu'ils ne subissent pas ou peu de perturbations électromagnétiques. De plus, les circuits électriques associés aux différents actionneurs appartenant à un dispositif de formation de la foule conforme à l'invention n'ont pas besoin d'être reliés individuellement à des sources de puissances et à des circuits de communication par autant de câbles connectés en parallèle. Au contraire, la puissance électrique et les signaux de communication peuvent être respectivement distribués en série successivement à chaque actionneur électrique. Cela permet de réduire considérablement le nombre de câbles électriques nécessaires et donc le coût du dispositif de formation de la foule.

De plus, compte tenu du rapprochement du moteur et des circuits électriques, les parties qui s'échauffent peuvent être refroidies au moyen d'un fluide caloporteur et d'un circuit de refroidissement commun. Cela permet de réduire le coût matériel et le coût d'installation d'un métier à tisser équipé d'un dispositif de formation de la foule conforme à l'invention.

Par ailleurs, comme le montrent les figures 2 et 3, l'ensemble autonome E comprend des éléments amortisseurs agencés de façon à réaliser une liaison souple entre le support 51 et chacun des blocs moteurs 40A et 40B. Par liaison souple, on désigne une liaison empêchant ou limitant la transmission des vibrations du ou des blocs moteurs au boîtier 50 et au circuit électrique qui y est logé. De même, le terme amortisseur est employé par référence à ces vibrations.

Ces éléments amortisseurs comprennent notamment des plots amortisseurs ou silences-blocs 66B, 67B, 68B et 69B qui s'étendent respectivement entre la surface radiale interne du carter du bloc moteur correspondant et des équerres 66A, 67A, 68A et 69A solidarisées par des vis 66C, 67C, 68C et 69C à la face externe de la partie centrale 51A. Compte tenu de leurs positions respectives sur la face externe de la partie centrale 51A, les équerres 68A et 69A sont pliées selon une ligne oblique de façon à épouser la forme cylindrique à base circulaire des surfaces radiales internes, dont la surface 42A, des carters des blocs moteurs 40A et 40B. Pour la même raison, les équerres 66A et 67A sont pliées selon une ligne droite. Chaque plot 66B, 67B, 68B et 69B est légèrement comprimé entre l'équerre correspondante 66A, 67A, 68A et 69A et la surface 42A.

Pour son maintien en position, chaque plot comprend une tige rigide filetée qui est vissée dans un perçage taraudé réalisé, dans la patte libre de l'équerre correspondante. Du côté opposé à la tige, chaque plot comprend un composant taraudé dans lequel peut être serrée une vis telle que la vis 66D destinée à maintenir en place le plot par rapport au carter 42. La tête de la vis 66D est logée dans un chambrage du carter 42 pour ne pas former de saillie au-dessus de la surface du carter 42.

Par ailleurs, les éléments amortisseurs comprennent un joint annulaire 80A en matériau élastique, tel qu'un élastomère, disposé entre la face externe de la partie centrale 51A du support 51 et une surface annulaire axiale 42B du carter 42 constituée par la face axiale terminale opposée au flasque externe 48A.

Ainsi assemblés, les éléments amortisseurs absorbent une partie de l'énergie vibratoire développée par chaque moteur en fonctionnement et ils en limitent la transmission aux composants des circuits électriques logés dans le boîtier 50. Par ailleurs, les tuyaux 75D et 75E présentent une incurvation déterminée de manière à accommoder l'écartement oscillant entre le support 51 et le bloc moteur 40A, dû aux vibrations de ce dernier. Les tuyaux 75D et 75E ne risquent donc pas de se déconnecter ni de contrarier l'amortissement des vibrations par la liaison souple entre le boîtier 50 et le moteur 40A.

Par ailleurs, le support 51 présente, perpendiculairement à l'axe X_{A}-X'_{A}, une section dont la superficie est inférieure à l'encombrement du flasque externe 48A dans un plan perpendiculaire à l'axe X_{A}-X'_{A}. En projection dans un tel plan, l'encombrement du support 51 est donc limité par l'encombrement de la face de l'actionneur qui porte l'arbre de sortie du moteur, c'est-à-dire le pignon 32. Ces dimensions permettent de réaliser un dispositif de formation de la foule compact dans lequel les ensembles autonomes actionnant les différents cadres de lisse ou lames sont juxtaposés. Cette compacité résulte également du fait que les différents actionneurs peuvent être alimentés en série par une seule ligne de puissance électrique et un seul câble de communication commun à tous les ensembles autonomes, comme cela est exposé ci-dessus.

De plus, La compacité du dispositif de formation de la foule peut être augmentée par l'utilisation d'un seul boîtier 50 pour alimenter, commander et contrôler deux blocs moteurs 40A et 40B, comme le montrent les figures 1 à 5.

Il est cependant possible de n'utiliser qu'un boîtier individuel pour contrôler un seul bloc moteur. Ce deuxième mode de réalisation est illustré par la figure 6 dans laquelle les références numériques des éléments correspondants des figures 1 à 5 sont augmentées de 100. On repère ainsi le bloc moteur 140, le mécanisme d'entraînement 130 associé à l'arbre de sortie du moteur, le boîtier 150 et son support 151, les plaques latérales 153A et 153B, le carter 142, les excroissances radiales 170D et 170E au sein desquelles sont percées des canaux rectilignes pour l'écoulement d'un fluide caloporteur, les tuyaux souples 175D et 175E ainsi que leurs deuxièmes éléments de raccord 163D, 163E, 176D et 176E, les premiers éléments de raccord 162D et 162E, et deux vis 166D et 167D pour la liaison souple entre le bloc moteur 140 et le boîtier 150. Au lieu de comporter deux vis telles que 67D comme le carter 42, le carter 142 présente trois vis réparties uniformément autour de l'axe de rotation du moteur à 120° l'une de l'autre, dont les vis 166D et 167D. Comme le montre la figure 6 et de manière analogue au premier mode de réalisation illustré aux figures 4 et 5, les tuyaux 175D et 175E se trouvent sur la périphérie externe du carter 142. Cette disposition permet un accès aisé à ces tuyaux 175D et 175E, ce qui facilite les opérations de séparation du boîtier 150 d'avec le bloc moteur 140.

La composition du circuit électrique 54A, à savoir la nature de ses composants et leur agencement, dépend du type de moteur électrique mis en oeuvre. Cela vaut aussi pour la structure de l'unité de contrôle/commande 55 qui peut être assimilée ou intégrée au circuit électrique 54A. Un circuit électrique au sens de l'invention peut donc comprendre tout type de composant électrique, de composant électronique et même une ou plusieurs carte(s) électronique(s).

## Revendications

1. Dispositif (D) de formation de la foule pour métier à tisser équipé de plusieurs cadres de lisse (C_{A}, C_{B}) et comprenant un système de tirage (20A-22A-26A-28A, 20B-22B-26B-28B) connecté, pour chaque cadre de lisse (C_{A}, C_{B}), à un ensemble autonome (E) destiné à manoeuvrer le système de tirage (20A-22A-26A-28A, 20B-22B-26B-28B) et comprenant au moins un bloc moteur électrique (40A, 40B ; 140) logé dans un carter (42 ; 142) et au moins un circuit électrique (54A, 55) destiné à transmettre (54B, 46) notamment la puissance électrique au bloc moteur électrique (40A, 40B ; 140), **caractérisé en ce que** l'ensemble autonome (E) comprend également un support (51 ; 151) agencé à proximité du bloc moteur électrique (40A, 40B ; 140), le circuit électrique (54A, 55) étant monté sur le support (51 ; 151), alors que le support (51 ; 151) présente au moins un conduit (51 D, 51 E) de refroidissement pour l'écoulement d'un fluide caloporteur, et **en ce que** l'ensemble autonome (E) comprend des éléments amortisseurs (66B, 67B, 68B, 69B, 75D, 75E, 80A) agencés de manière à réaliser une liaison souple entre le support (51 ; 151) et le bloc moteur électrique (40A, 40B ; 140).

2. Dispositif (D) selon la revendication 1, **caractérisé en ce que** le support (51 ; 151) est fixé sur une extrémité axiale du carter (42).

3. Dispositif (D) selon l'une des revendications précédentes, **caractérisé en ce que** le support (51 ; 151) présente deux conduits (51 D, 51 E) de refroidissement et **en ce que** le bloc moteur électrique (40A, 40B ; 140) est équipé d'un circuit de refroidissement (70A, 71, 72, 73, 70C) raccordé aux conduits (51 D, 51 E) de refroidissement.

4. Dispositif (D) selon la revendication 3, **caractérisé en ce que** le circuit de refroidissement (70A, 71, 72, 73, 70C) comprend un canal (72) hélicoïdal ménagé entre le carter (42) et une chemise (49) entourant le bloc moteur électrique (40A, 40B ; 140).

5. Dispositif (D) selon l'une des revendications précédentes, **caractérisé en ce que** les éléments amortisseurs (66B, 678, 68B, 69B, 75D, 75E, 80) comprennent des plots amortisseurs (66B, 678, 68B, 69B) s'étendant chacun entre une surface radiale interne (42A) du carter (42) et une surface solidaire du support (51).

6. Dispositif (D) selon l'une des revendications précédentes, **caractérisé en ce que** les éléments amortisseurs (66B, 67B, 68B, 69B, 75D, 75E, 80A) comprennent un joint (80A) réalisé en matériau élastique et disposé entre le support (51) et une surface axiale (42B) du carter (42).

7. Dispositif (D) selon l'une des revendications 3 à 6, **caractérisé en ce que** le circuit de refroidissement (70A, 71, 72, 73, 70C) est raccordé aux conduits (51 D, 51 E) par l'intermédiaire de tuyaux souples (75D, 75E).

8. Dispositif (D) selon l'une des revendications 3 à 7, **caractérisé en ce que** le support (51 ; 151) est constitué d'un tronçon de profilé dont la partie centrale (51A) définit deux orifices traversant s'étendant parallèlement à l'axe longitudinal (Y-Y') du profilé et formant chacun un conduit (51 D, 51 E) de refroidissement.

9. Dispositif (D) selon la revendication 8, **caractérisé, en ce que** le support (51 ; 151) présente deux ailes latérales (51 B, 51C) s'étendant transversalement à l'axe longitudinal (Y-Y') du profilé et **en ce que** le support (51 ; 151) est en outre équipé de deux plaques (53A, ; 53D ; 153A, 153B) et d'un couvercle (52) aptes à recouvrir les sections libres du profilé, de façon à former un boîtier (50 ; 150) pour englober le circuit électrique (54A, 55).

10. Dispositif selon l'une des revendications 8 à 9, **caractérisé en ce que** le support (51 ; 151) présente, en projection dans un plan perpendiculaire à l'axe de rotation (X_{A}-X'_{A}, X_{B}-X'_{B}) du bloc moteur (40A, 40B ; 140), un encombrement inférieur à l'encombrement de la face (48A) du bloc moteur (40A, 40B ; 140) qui porte l'arbre de sortie (32).

11. Dispositif (D) selon l'une des revendications précédentes, **caractérisé en ce que** l'ensemble autonome (E) comprend deux blocs moteurs (40A, 40B) montés côte-à-côte avec leurs axes de rotation (X_{A}-X'_{A}, X_{B}-X'_{B}) sensiblement parallèles entre eux, le support (51) et le circuit électrique (54A, 55) étant communs aux blocs moteurs (40A, 40B).

12. Dispositif (D) selon l'une des revendications précédentes, **caractérisé en ce que** le bloc moteur électrique (40A, 40B ; 140) comprend un moteur de type synchrone et sans balai, le circuit électrique (54A, 55) étant apte à commander la commutation des courants électriques destinés à actionner le moteur.

13. Métier à tisser, **caractérisé en ce qu'**il comprend au moins un dispositif (D) de formation de la foule selon l'une des revendications précédentes, comprenant plusieurs ensembles autonomes (E).

14. Métier à tisser selon la revendication 13, **caractérisé en ce que** les ensembles autonomes (E) sont reliés en série, d'une part, à une seule ligne d'alimentation en puissance électrique et, d'autre part, à un seul câble de communication communs (L).

## Claims

1. Shed-forming device (D) for a weaving loom equipped with several heddle frames (C_{A}, C_{B}) and comprising a pulling system (20A-22A-26A-28A, 20B-22B-26B-28B) connected, for each heddle frame (C_{A}, C_{B}), to a self-contained assembly (E) intended to operate the pulling system (20A-22A-26A-28A, 20B-22B-26B-28B) and comprising at least one electric motor unit (40A, 40B; 140) housed in a casing (42; 142) and at least one electrical circuit (54A, 55) intended to transmit (54B, 46) in particular the electric power to the electric motor unit (40A, 40B; 140), **characterized in that** the self-contained assembly (E) also includes a support (51; 151) placed close to the electric motor unit (40A, 40B; 140), the electrical circuit (54A, 55) being mounted on the support (51; 151), while the support (51; 151) has at least one cooling duct (51D, 51E) for the flow of a heat-transfer fluid, and **in that** the self-contained assembly (E) comprises damping elements (66B, 67B, 68B, 69B, 75D, 75E, 80A) arranged so as to provide a flexible link between the support (51; 151) and the electric motor unit (40A, 40B; 140).

2. Device (D) according to Claim 1, **characterized in that** the support (51; 151) is fitted onto one axial end of the casing (42).

3. Device (D) according to either of the preceding claims, **characterized in that** the support (51; 151) has two cooling ducts (51D, 51E) and **in that** the electric motor unit (40A, 40B; 140) is equipped with a cooling circuit (70A, 71, 72, 73, 70C) connected to the cooling ducts (51D, 51E).

4. Device (D) according to Claim 3, **characterized in that** the cooling circuit (70A, 71, 72, 73, 70C) comprises a helical channel (72) provided between the casing (42) and a skirt (49) surrounding the electric motor unit (40A, 40B; 140).

5. Device (D) according to one of the preceding claims, **characterized in that** the damping elements (66B, 67B, 68B, 69B, 75D, 75E, 80A) comprise damping mounts (66B, 67B, 68B, 69B) each extending between an internal radial surface (42A) of the casing (42) and a surface integral with the support (51).

6. Device (D) according to one of the preceding claims, **characterized in that** the damping elements (66B, 67B, 68B, 69B, 75D, 75E, 80A) include a seal (80) made of elastic material and placed between the support (51) and an axial surface (42B) of the casing (42).

7. Device (D) according to one of Claims 3 to 6, **characterized in that** the cooling circuit (70A, 71, 72, 73, 70C) is connected to the ducts (51D, 51E) via hoses (75D, 75E).

8. Device (D) according to one of Claims 3 to 7, **characterized in that** the support (51; 151) consists of a section piece, the central part (51A) of which defines two through-holes extending parallel to the longitudinal axis (Y-Y') of the section piece and each forming a cooling duct (51D, 51E).

9. Device (D) according to Claim 8, **characterized in that** the support (51; 151) has two lateral flanges (51B, 51C) extending transversely to the longitudinal axis (Y-Y') of the section piece and **in that** the support (51; 151) is furthermore equipped with two plates (53A; 53D; 153A, 153B) and with a cover (52) that are capable of covering the free sections of the section piece, so as to form a case (50; 150) for enclosing the electrical circuit (54A, 55).

10. Device according to either of Claims 8 and 9, **characterized in that** the support (51; 151) has, in projection in a plane perpendicular to the rotation axis (X_{A}-X'_{A}, X_{B}-X'_{B}) of the motor unit (40A, 40B; 140), smaller dimensions than those of the face (48A) of the motor unit (40A, 40B; 140) that carries the output shaft (32).

11. Device (D) according to one of the preceding claims, **characterized in that** the self-contained assembly (E) comprises two motor units (40A, 40B) mounted side by side with their rotation axes (X_{A}-X'_{A}, X_{B}-X'_{B}) approximately parallel to each other, the support (51) and the electrical circuit (54A, 55) being common to the motor units (40A, 40B).

12. Device (D) according to one of the preceding claims, **characterized in that** the electric motor unit (40A, 40B; 140) comprises a brushless synchronous motor, the electrical circuit (54A, 55) being capable of commutating the electric currents intended for actuating the motor.

13. Weaving loom, **characterized in that** it comprises at least one shed-forming device (D) according to one of the preceding claims, comprising several self-contained assemblies (E).

14. Weaving loom according to Claim 13, **characterized in that** the self-contained assemblies (E) are connected in series, on one side, to a single electric power supply line and, on the other side, to a single common communication cable (L).

## Patentansprüche

1. Vorrichtung (D) zur Fachbildung für Webmaschinen, die mit mehreren Schaftrahmen (C_{A}, C_{B}) ausgerüstet ist und ein Zugsystem (20A-22A-26A-28A, 20B-22B-26B-28B) umfasst, das für jeden Schaftrahmen (C_{A}, C_{B}) an eine autonome Anordnung (E) angeschlossen ist, die vorgesehen ist, das Zugsystem (20A-22A-26A-28A, 20B-22B-26B-28B) zu betätigen, und die mindestens einen elektrischen Motorblock (40A, 40B; 140), der in einem Gehäuse (42, 142) aufgenommen ist, und mindestens einen elektrischen Kreis (54A, 55) umfasst, der vorgesehen ist, insbesondere die elektrische Leistung an den elektrischen Motorblock (40A, 40B; 140) zu übertragen (54B, 46), **dadurch gekennzeichnet, dass** die autonome Anordnung (E) gleichfalls einen Träger (51; 151) umfasst, der in der Nähe des elektrischen Motorblocks (40A, 40B; 140) angeordnet ist, wobei der elektrische Kreis (44A, 55) an dem Träger (51; 151) befestigt ist und der Träger (51; 151) mindestens einen Kühlkanal (51D, 51E) für den Durchfluss eines Kühlfluids aufweist, und dass die autonome Anordnung (E) Dämpfungselemente (66B, 67B, 68B, 69B, 75D, 75E, 80A) umfasst, die angeordnet sind, um eine weiche Verbindung zwischen dem Träger (51; 151) und dem elektrischen Motorblock (40A, 40B; 140) herzustellen.

2. Vorrichtung (D) nach Anspruch 1, **dadurch gekennzeichnet, dass** der Träger (51; 151) an einem axialen Ende des Gehäuses (42) befestigt ist.

3. Vorrichtung (D) nach einem der vorhergehenden Ansprüche, **dadurch gekennzeichnet, dass** der Träger (51; 151) zwei Kühlkanäle (51D, 51E) aufweist und dass der elektrische Motorblock (40A, 40B; 140) mit einem Kühlkreis (70A, 71, 72, 73, 70C) ausgerüstet ist, der an die Kühlkanäle (51D, 51E) angeschlossen ist.

4. Vorrichtung (D) nach Anspruch 3, **dadurch gekennzeichnet, dass** der Kühlkreis (70A, 71, 72, 73, 70C) einen spiralförmigen Kanal (72) aufweist, der zwischen dem Gehäuse (42) und einer den elektrischen Motorblock (40A, 40B; 140) umgebenden Schürze (49) angeordnet ist.

5. Vorrichtung (D) nach einem der vorhergehenden Ansprüche, **dadurch gekennzeichnet, dass** die Dämpfungselemente (66B, 67B, 68B, 69B, 75D, 75E, 80A) Dämpfungsstopfen (66B, 67B, 68B, 69B) umfassen, die sich jeweils zwischen einer radialen Innenfläche (42A) des Gehäuses (42) und einer mit dem Träger (51) verbundenen Fläche erstrecken.

6. Vorrichtung (D) nach einem der vorhergehenden Ansprüche, **dadurch gekennzeichnet, dass** die Dämpfungselemente (66b, 67B, 68B, 69B, 75D, 75E, 80A) eine Dichtung (80A) umfassen, die aus elastischem Material hergestellt ist und zwischen dem Träger (51) und einer axialen Fläche (42B) des Gehäuses (42) angeordnet ist.

7. Vorrichtung (D) nach einem der Ansprüche 3 bis 6, **dadurch gekennzeichnet, dass** der Kühlkreis (70A, 71, 72, 73, 70C) an die Kanäle (51D, 51E) mittels biegbarer Rohre (75D, 75E) angeschlossen ist.

8. Vorrichtung (D) nach einem der Ansprüche 3 bis 7, **dadurch gekennzeichnet, dass** der Träger (51; 151) aus einem Profilstück hergestellt ist, dessen Mittelteil (51A) zwei durchgreifende Öffnungen begrenzt, die sich parallel zur Längsachse (Y-Y') des Profils erstrecken und die jede einen Kühlkanal (51D, 51E) bilden.

9. Vorrichtung (D) nach Anspruch 8, **dadurch gekennzeichnet, dass** der Träger (51; 151) zwei Seitenwände (51B, 51C) aufweist, die sich quer zur Längsachse (Y-Y') des Profils erstrecken, und dass der Träger (51, 151) außerdem mit zwei Platten (53A, 53D; 153A, 153B) und einem Deckel (52) ausgerüstet ist, die geeignet sind, die freien Querschnitte des Profils zu bedecken, um ein kastenförmiges Gehäuse (50; 150) zur Aufnahme des elektrischen Kreises (54A, 55) zu bilden.

10. Vorrichtung (D) nach einem der Ansprüche 8 bis 9, **dadurch gekennzeichnet, dass** der Träger (51; 151) in der Projektion in eine Ebene senkrecht zur Drehachse (X_{A}-X'_{A}, X_{B}-X'_{B}) des Motorblocks (40A, 40B; 140) einen Platzaufwand geringer als der Platzaufwand der Fläche (48A) des Motorblocks (40A, 40B; 140), der die Ausgangswelle (32) trägt, aufweist.

11. Vorrichtung (D) nach einem der vorhergehenden Ansprüche, **dadurch gekennzeichnet, dass** die autonome Anordnung (E) zwei Motorblöcke (40A, 40B) umfasst, die Seite an Seite mit ihren Drehachsen (X_{A}-X'_{A}, X_{B}-X'_{B}) im Wesentlichen parallel zueinander befestigt sind, wobei der Träger (51) und der elektrische Kreis (54A, 55) den Motorblöcken (40A, 40B) gemeinsam sind.

12. Vorrichtung (D) nach einem der vorhergehenden Ansprüche, **dadurch gekennzeichnet, dass** der elektrische Motorblock (40A, 40B; 140) einen bürstenlosen Synchronmotor umfasst, wobei der elektrische Kreis (54A, 55) geeignet ist, die Kommutierung der für die Betätigung des Motors vorgesehenen elektrischen Ströme zu steuern.

13. Webmaschine, **dadurch gekennzeichnet, dass** sie mindestens eine Vorrichtung (D) zur Fachbildung nach einem der vorhergehenden Ansprüche umfasst, die mehrere autonome Anordnungen (E) aufweist.

14. Webmaschine nach Anspruch 13, **dadurch gekennzeichnet, dass** die autonomen Anordnungen (E) in Reihe einerseits an eine einzige elektrische Versorgungsleitung und andererseits an ein einziges Kabel zur gemeinsamen Kommutierung (L) verbunden sind.
